# FASCICULE DE BREVET EUROPEEN

(11) **EP 4 703 596 B1**
(45) Date de publication et mention de la délivrance du brevet: **30.09.2026**
(21) Numéro de dépôt: 25191683.9
(22) Date de dépôt: 24.07.2025
(51) Int. Cl.: F16B 31/04, F16B 5/02, F16B 7/18

(54) **ENSEMBLE VISSÉ ET PRÉCONTRAINT PRÉSENTANT UNE CONCEPTION AMÉLIORÉE À DES FINS DE MAINTIEN DES PERFORMANCES SOUS TEMPÉRATURES CRYOGÉNIQUES**
VORGESPANNTE SCHRAUBANORDNUNG MIT VERBESSERTEM DESIGN ZUR ERHALTUNG DER LEISTUNG BEI KRYOGENEN TEMPERATUREN
SCREW AND PRELOADED ASSEMBLY WITH IMPROVED DESIGN FOR MAINTAINING PERFORMANCE AT CRYOGENIC TEMPERATURES

(30) Priorité: 28.08.2024 BE 202405575
(43) Date de publication de la demande: 04.03.2026
(73) Titulaire: Safran Aero Boosters, 4041 Herstal (BE)
(72) Inventeur: ROIG MASSO, Bernat, 77550 MOISSY-CRAMAYEL (FR)
(74) Mandataire: Santarelli

(56) Documents cités:
- WO-A1-2021/207776
- US-A- 3 270 910
- US-A- 3 425 718
- US-A1- 2007 278 792

## Description

### DOMAINE TECHNIQUE

L'invention concerne le domaine des ensembles vissés et précontraints, destinés à être utilisés dans des environnements contraignants, comme des environnements cryogéniques.

L'invention trouve des applications particulières dans le domaine des moteurs d'aéronef ou d'engin spatial, comme des lanceurs ou des fusées. Les pièces vissées et précontraintes au sein de ces ensembles peuvent être du type vanne, clapet, boitier, canalisation, ou tout autre composant de moteur. De manière plus générale, il peut s'agir de tout composant d'un système de gestion de fluides cryogéniques, dans un moteur ou pour d'autres applications.

### ÉTAT DE LA TECHNIQUE ANTÉRIEURE

Dans l'art antérieur, il est connu de réaliser des ensembles vissés et précontraints à température ambiante, c'est-à-dire dans des conditions normales de température et de pression. Lorsque de tels ensembles sont dédiés à des utilisations dans des environnements cryogéniques, l'une des problématiques techniques réside dans la conservation de la précontrainte. En effet, la précontrainte des pièces peut s'avérer nécessaire pour garantir un bon fonctionnement, de sorte que cette précontrainte doit être conservée même à des températures cryogéniques, au moins en partie. Cela permet par exemple d'éviter le décollement entre les deux pièces précontraintes d'un tel ensemble. US2007278792A1 divulgue un ensemble vissé et précontraint connu.

Lors de l'assemblage des pièces de l'ensemble à la température ambiante, la précontrainte peut être appliquée par le serrage de vis ou de boulons, à fort couple de serrage. Ce serrage provoque une déformation élastique entre les différentes pièces assemblées, ainsi que sur les organes vissés de serrage. La sollicitation mécanique de ces organes de serrage est alors élevée, et potentiellement proche de la limite élastique du matériau de ces organes.

En outre, les matériaux utilisés pour les pièces à assembler peuvent être différents du matériau des organes de serrage. Dans un cas assez classique, les deux pièces à assembler sont réalisées en aluminium ou dans l'un de ses alliages, tandis que les organes de serrage sont en acier ou dans un autre alliage haute résistance. Il peut par exemple être utilisé des alliages du type Nickel-Chrome, Nickel-Chrome-Fer, ou encore Nickel-Chrome-Cobalt. Dans cette situation, les coefficients de dilatation thermique des matériaux utilisés pour la réalisation de l'ensemble vissé et précontraint peuvent être très différents. En conséquence, lorsque l'ensemble est soumis à des conditions cryogéniques, à savoir à de très basses températures inférieures ou égales à 120K, les contractions et les dilatations thermiques des pièces s'avèrent non-négligeables. A titre d'exemple, elles peuvent être de l'ordre de 0,5% pour des métaux tels que des alliages d'aluminium, et elles peuvent surtout être très différentes au sein de l'ensemble, en fonction des matériaux utilisés.

Lorsque ce type d'ensemble vissé et précontraint est soumis à des conditions cryogéniques, la précontrainte initialement introduite à température ambiante peut être partiellement ou totalement perdue, à cause des contractions thermiques différentielles entre les pièces, et les organes de serrage. En particulier, dans le cas où les pièces de l'ensemble sont réalisées en aluminium et les organes de serrage sont fabriqués en acier, les pièces se contractent plus fortement que les organes de serrage.

Afin de limiter le risque de perte totale de la précontrainte lors de l'utilisation de l'ensemble à des températures cryogéniques, une solution classique réside dans l'augmentation de l'intensité de la précontrainte initiale, en appliquant des couples de serrage encore plus élevés sur les organes des serrage à température ambiante. Cependant, cette précontrainte élevée induit des sollicitations mécaniques plus importantes sur les pièces de l'ensemble, ainsi que sur les organes de serrage.

Par conséquent, il peut être amené à réaliser un épaississement des pièces à assembler au niveau de leurs parties de fixation, traversées par les organes de serrage, afin de diminuer les contraintes mécaniques au sein de ces mêmes parties. Cela peut également conduire à allonger ces parties de fixation des pièces, ainsi qu'à surdimensionner les organes de serrage. En effet, concernant les organes de serrage tels que des vis et des boulons, il peut être amené à augmenter leur diamètre et/ou leur nombre.

Les conséquences décrites ci-dessus présentent un impact non-négligeable en termes de masse, de coût, et d'encombrement. Par exemple, pour une liaison de deux brides, l'une en acier et l'autre en aluminium, afin de garantir le non-décollement des deux pièces à une température de 20K, le nombre de vis pour lier les deux pièces doit augmenter de 50%, et leur diamètre augmenter de 30% par rapport à une solution avec les mêmes brides ne devant pas supporter des conditions cryogéniques. Cela peut globalement conduire à une augmentation de la masse totale des brides et des vis d'environ 70%.

### EXPOSÉ DE L'INVENTION

Pour résoudre au moins partiellement les inconvénients décrits ci-dessus, relatifs aux réalisations de l'art antérieur, l'invention a tout d'abord pour objet un ensemble vissé et précontraint comprenant une première pièce, une seconde pièce, ainsi qu'au moins un organe vissé de serrage coopérant avec chacune des première et seconde pièces de manière à appliquer un effort de serrage, selon une direction de serrage forçant ces deux pièces l'une vers l'autre, la première pièce comportant une première partie de fixation traversée par l'organe de serrage et présentant une première surface d'appui contre laquelle est agencée une première portion d'appui de l'organe de serrage,
la première pièce étant réalisée dans un premier matériau présentant un premier coefficient de dilatation thermique C1, la seconde pièce étant réalisée dans un second matériau présentant un second coefficient de dilatation thermique C2, et l'organe de serrage étant réalisé dans un troisième matériau présentant un troisième coefficient de dilatation thermique C3, les premier et troisième coefficients de dilatation thermique C1 et C3 satisfaisant la formule (a) suivante, pour toute température comprise dans un intervalle de températures allant de 0K à 120K :$C 3 < 0 , 7 . C 1 ,$et plus préférentiellement C3 < 0,5.C1.

Selon l'invention, l'ensemble comporte en outre un organe intermédiaire précontraint par l'effort de serrage, l'organe intermédiaire étant réalisé dans un quatrième matériau présentant un quatrième coefficient de dilatation thermique C4, les troisième et quatrième coefficients de dilatation thermique C3 et C4 satisfaisant la formule (b) suivante, pour toute température comprise dans un intervalle de températures allant de 0K à 120K :$0 , 8 < C 3 / C 4 < 1 , 2 ,$ et plus préférentiellement 0,9 < C3/C4 < 1,1.

De plus, la première pièce comporte une première partie de transmission d'effort présentant une seconde surface d'appui contre laquelle est agencée une première portion d'extrémité de l'organe intermédiaire précontraint, les première et seconde surfaces d'appui de la première pièce étant coplanaires, et enfin, la seconde pièce comporte une seconde partie de fixation traversée par l'organe de serrage, un jeu étant prévu entre les première et seconde parties de fixation, selon la direction de serrage.

L'invention est avantageuse en ce qu'elle est basée sur une conception permettant de déporter la précontrainte vers un organe intermédiaire dédié au sein de l'ensemble. Aussi, cette précontrainte n'est plus directement introduite dans les parties de fixation des pièces traversées par l'organe de serrage, de sorte que ces parties de fixation, telles que des brides, n'ont plus besoin d'être surdimensionnées. Il en résulte avantageusement des gains en termes de masse, d'encombrement et de coûts, ainsi que des gains en matière de consommation en carburant lorsqu'un tel ensemble selon l'invention est intégré à un moteur d'aéronef ou de véhicule spatial.

En effet, grâce à l'invention, une précontrainte importante peut être appliquée à température ambiante à l'aide de l'organe de serrage, sans risquer d'endommager les pièces, et sans nécessiter de les surdimensionner dans le but d'abaisser les contraintes introduites dans ces pièces. En raison de l'intensité importante de la précontrainte introduite, celle-ci peut être maintenue au moins en partie même lors d'une utilisation de l'ensemble dans des conditions cryogéniques, de sorte que cet ensemble n'est pas sujet à décollement des pièces.

De plus, l'intérêt de la coplanarité entre les deux surfaces d'appui de la première pièce réside dans l'annulation de l'effet des dilatations thermiques différentielles, dans le sens parallèle à la direction de serrage, pour la pièce en question. De ce fait, la diminution de précontrainte dans les organes de serrage demeure très faible, car celle-ci ne dépend que de l'écart entre les coefficients de dilatation thermique C3 et C4, qui reste faible ou nul.

En résumé, grâce à l'invention, la précontrainte à appliquer à température ambiante peut être fortement réduite, car elle va diminuer très faiblement en conditions cryogéniques. Avantageusement, cela permet de moins solliciter les pièces d'un point de vue mécanique. L'invention comporte de préférence au moins l'une quelconque des caractéristiques techniques optionnelles suivantes, prises isolément ou en combinaison.

Selon un premier mode de réalisation préféré de l'invention, la seconde pièce comporte une seconde partie de transmission d'effort présentant une troisième surface d'appui contre laquelle est agencée une seconde portion d'extrémité de l'organe intermédiaire précontraint, et les premier et second coefficients de dilatation thermique C1 et C2 satisfont la formule (c) suivante, pour toute température comprise dans un intervalle de températures allant de 0K à 120K :$0 , 8 < C 1 / C 2 < 1 , 2$ et plus préférentiellement 0,9 < C1/C2 < 1,1.

De préférence, la seconde partie de fixation de la seconde pièce, traversée par l'organe de serrage, présente une quatrième surface d'appui contre laquelle est agencée une seconde portion d'appui de l'organe de serrage, les troisième et quatrième surfaces d'appui de la seconde pièce étant coplanaires.

De préférence, l'organe vissé de serrage est un boulon dont la tête de vis et l'écrou forment respectivement les première et seconde portions d'appui, ou inversement, ou l'organe de serrage est une vis dont la portion filetée est vissée dans un orifice fileté réalisé dans l'une des première et seconde parties de fixation.

De préférence, les première et seconde parties de fixation sont des brides de fixation, préférentiellement annulaires, d'axes centraux parallèles à la direction de serrage, l'organe intermédiaire précontraint étant de préférence agencé dans un espace défini intérieurement par les brides de fixation, et préférentiellement de forme annulaire.

Alternativement, la première pièce comporte une zone de section en forme générale de U, dont une base du U correspond à la première partie de fixation traversée par l'organe de serrage, celui-ci étant préférentiellement entouré par l'organe intermédiaire précontraint, de préférence de forme annulaire.

Selon un second mode de réalisation préféré de l'invention, l'organe intermédiaire précontraint est réalisé d'un seul tenant avec la seconde pièce, les second et quatrième matériaux étant identiques, et les premier et second coefficients de dilatation thermique C1 et C2 satisfont la formule (d) suivante, pour toute température comprise dans un intervalle de températures allant de 0K à 120K :$C 2 < 0 , 7 . C 1 ,$ et plus préférentiellement C2 < 0,5.C1.

Quel que soit le mode de réalisation préféré envisagé, le jeu prévu entre les première et seconde parties de fixation, selon la direction de serrage, est de préférence compris entre 0,1 et 1 mm, dans des conditions normales de température et de pression.

De préférence, les première et seconde pièces de l'ensemble correspondent chacune à un élément parmi les éléments suivants : une vanne, un clapet, un boitier, une canalisation, ou tout autre composant de moteur pour véhicule spatial ou pour aéronef, de préférence à hydrogène, ou tout composant d'un système de gestion de fluides cryogéniques.

Enfin, l'invention a également pour objet un moteur d'aéronef ou de véhicule spatial, comme un lanceur ou une fusée, comprenant au moins un ensemble vissé et précontraint tel que décrit ci-dessus, le moteur étant préférentiellement un moteur à hydrogène.

D'autres avantages et caractéristiques de l'invention apparaîtront dans la description détaillée non limitative ci-dessous.

### BRÈVE DESCRIPTION DES DESSINS

[Fig. 1] représente très schématiquement un moteur d'aéronef ou de véhicule spatial ;
[Fig. 2] est une vue en coupe d'un ensemble vissé et précontraint appartenant au moteur montré sur la figure précédente, l'ensemble se présentant sous la forme d'un premier mode de réalisation préféré de l'invention ;
[Fig. 3] est une vue en perspective d'un organe intermédiaire précontraint, appartenant à l'ensemble montré sur la figure précédente ;
[Fig. 4] est une vue en coupe d'un ensemble vissé et précontraint similaire à celui montré sur la figure 2, et qui se présente sous la forme d'une alternative ;
[Fig. 5] est une vue en coupe d'un ensemble vissé et précontraint appartenant au moteur montré sur la figure 1, l'ensemble se présentant sous la forme d'un second mode de réalisation préféré de l'invention ; et
[Fig. 6] est une vue en coupe d'un ensemble vissé et précontraint similaire à celui montré sur la figure 5, et qui se présente sous la forme d'une alternative.

### DESCRIPTION DÉTAILLÉE DE L'INVENTION

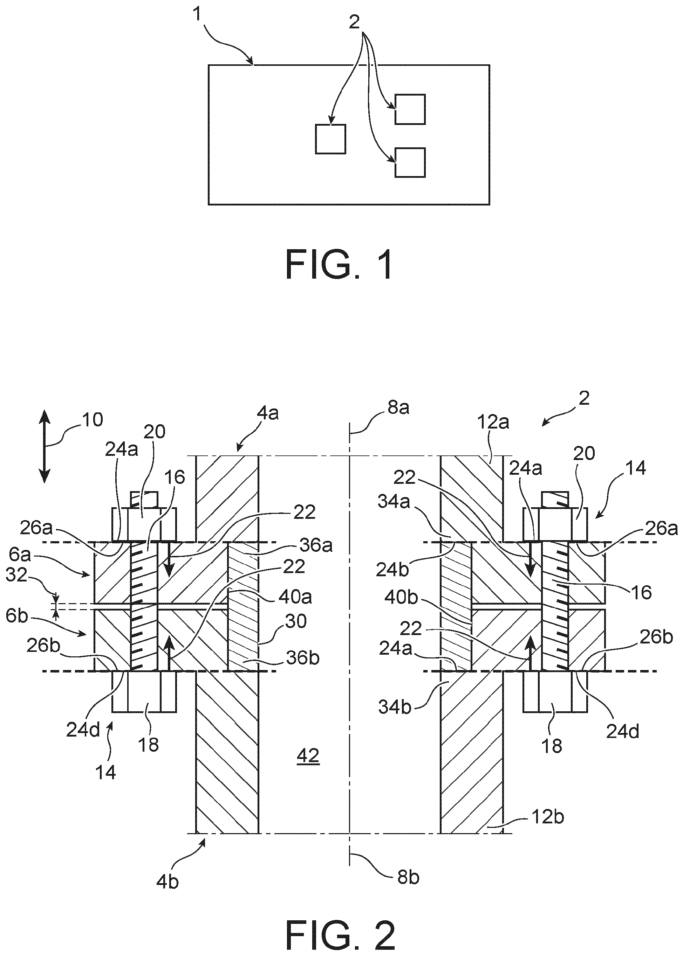

En référence tout d'abord à la figure 1, il est représenté de matière très schématique un moteur d'aéronef, ou un moteur de véhicule spatial tel qu'un lanceur ou une fusée. Il s'agit de préférence d'un moteur 1 à hydrogène, qui comprend un ou plusieurs ensembles spécifiques à l'invention.

D'autres applications demeurent possibles pour l'invention, qui peut par exemple être utilisée dans tout domaine mettant en œuvre un système de gestion de fluides cryogéniques.

La figure 2 représente un premier mode de réalisation préféré de l'invention, correspondant à un ensemble 2 vissé et précontraint, destiné à l'assemblage de deux pièces l'une sur l'autre. Il s'agit ici d'une première pièce 4a et d'une seconde pièce 4b, destinées à être exposées à des températures cryogéniques en fonctionnement, par exemple allant de 0K à 120K.

Ces pièces 4a, 4b peuvent être destinées à la circulation d'un fluide cryogénique, ou bien simplement destinées à être exposées à des températures cryogéniques. A titre d'exemples non-limitatifs, chacune d'elles peut correspondre à l'un des élément parmi une vanne, un clapet, un boitier, une canalisation, ou tout autre composant du moteur 1.

Dans le premier mode de réalisation préféré représenté sur la figure 2, l'ensemble vissé et précontraint 2 comporte les deux pièces 4a, 4b, correspondant par exemple à deux canalisations fixées l'une sur l'autre, avec une précontrainte assurant le plaquage de l'une sur l'autre, aussi bien à la température ambiante de montage qu'à la température de fonctionnement.

La première pièce 4a présente donc une forme creuse de canalisation classique, à une extrémité de laquelle s'étend une première bride de fixation annulaire 6a, formant une première partie de fixation de cette pièce 4a. De manière analogue, la seconde pièce 4b présente une forme creuse de canalisation classique, à une extrémité de laquelle s'étend une seconde bride de fixation annulaire 6b, formant une seconde partie de fixation de cette pièce 4b.

Les deux brides de fixation 6a, 6b présentent des axes centraux 8a, 8b confondus, correspondant aux axes centraux autour desquels s'étendent les corps de canalisation 12a, 12b. Ces deux axes sont parallèles à une direction de serrage 10, dans laquelle les deux pièces 4a, 4b sont forcées l'une vers l'autre, afin d'obtenir la précontrainte désirée.

Un tel serrage est réalisé à l'aide d'un organe vissé de serrage 14, et de préférence à l'aide de plusieurs de ces organes 14 répartis circonférentiellement le long des brides 6a, 6b, autour des axes 8a, 8b. Par la suite, seul l'un de ces organes de serrage 14 sera décrit, mais il doit être compris qu'ils disposent tous d'une conception identique ou similaire. Dans ce premier mode de réalisation préféré, il s'agit d'un boulon 14 formé par une vis 16 et un écrou 20, la tête 18 de la vis coopérant avec la seconde bride de fixation 6b et l'écrou 20 coopérant avec la première bride de fixation 6a, ou inversement.

En appliquant un couple de serrage sur le boulon 14 qui enserre axialement les deux brides 6a, 6b tout en les traversant, ce boulon est effectivement en mesure d'appliquer un effort de serrage représenté par les flèches 22, et orienté selon la direction 10 qui est parallèle aux axes 8a, 8b.

La première bride de fixation 6a présente une première surface d'appui 24a contre laquelle est agencée une première portion d'appui 26a du boulon 14, formée par une face axiale de son écrou 20.

L'une des particularités de l'invention réside dans la mise en œuvre d'un organe intermédiaire 30 précontraint par l'effort de serrage, en ce sens que les deux pièces 4a, 4b sont chacune contraintes axialement contre cette pièce intermédiaire 30, de par le serrage appliqué par les boulons 14. En revanche, pour privilégier la précontrainte dans les pièces 4a, 4b au niveau de leurs contacts avec cette organe intermédiaire 30, il est maintenu un jeu 32 entre les surfaces en regard des première et seconde brides 6a, 6b. Ce jeu 32, selon la direction de serrage 10, évite ainsi le contact entre les brides, et il est fixé à une valeur par exemple comprise entre 0,1 et 1 mm. Il s'agit d'une valeur de jeu appliquée lors du montage des pièces 4a, 4b, dans des conditions normales de température et de pression. Lorsque l'ensemble 2 est soumis à des températures cryogéniques, la valeur de ce jeu peut différer, mais il est fait en sorte que ce jeu 32 subsiste dans toute la plage de valeurs de températures susceptibles d'être rencontrées par l'ensemble 2, en conditions d'utilisation et de fonctionnement.

Afin de maintenir le jeu 32, il est prévu que la première pièce 4a comporte une première partie de transmission d'effort 34a, qui correspond à une extrémité du corps de canalisation 12a, et qui porte la bride 6a. Cette première partie de transmission d'effort 34a présente une seconde surface d'appui 24b, orthogonale ou sensiblement orthogonale à la direction de serrage 10, et contre laquelle est agencée une première portion d'extrémité 36a de l'organe intermédiaire précontraint 30. La première partie de transmission d'effort 34a présente une épaisseur, selon la direction de serrage 10, qui est strictement supérieure à celle de la bride 6a dans cette même direction.

Les première et seconde surfaces d'appui 24a, 24b de la première pièce sont coplanaires, c'est-à-dire inscrites dans un même plan, orthogonal ou sensiblement orthogonal à la direction de serrage 10.

De manière analogue, il est prévu que la seconde pièce 4b comporte une seconde partie de transmission d'effort 34b, qui correspond à une extrémité du corps de canalisation 12b, et qui porte la bride 6b. Cette seconde partie de transmission d'effort 34b présente une troisième surface d'appui 24c, orthogonale ou sensiblement orthogonale à la direction de serrage 10, et contre laquelle est agencée une seconde portion d'extrémité 36b de l'organe intermédiaire précontraint 30. La seconde partie de transmission d'effort 34b présente une épaisseur, selon la direction de serrage 10, qui est strictement supérieure à celle de la bride 6b dans cette même direction.

En outre, la seconde bride de fixation 6b présente une quatrième surface d'appui 24d contre laquelle est agencée une seconde portion d'appui 26b du boulon 14, formée par une face axiale de la tête de vis 18. Les troisième et quatrième surfaces d'appui 24c, 24d de la seconde pièce 4b sont coplanaires, c'est-à-dire inscrites dans un même plan, orthogonal ou sensiblement orthogonal à la direction de serrage 10.

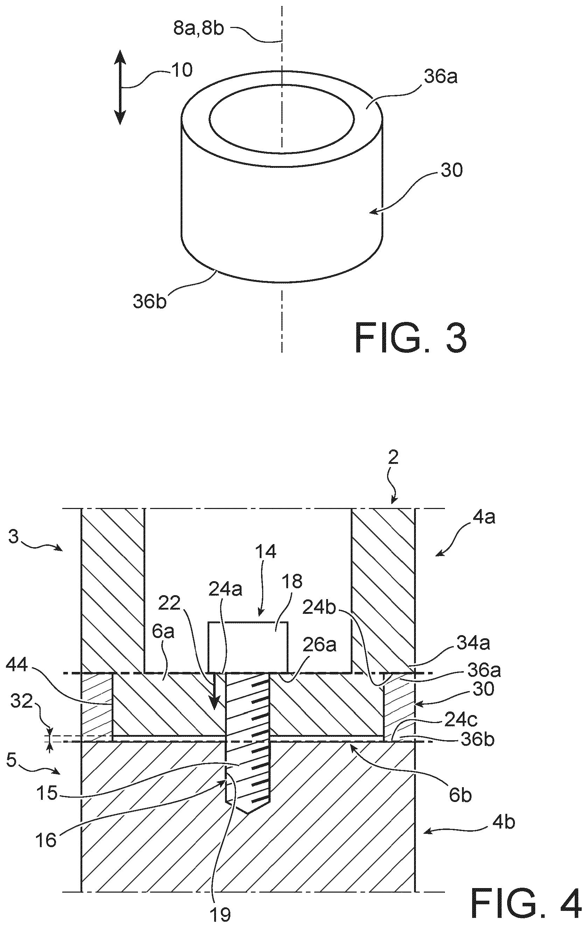

Dans ce premier mode de réalisation préféré de l'invention, l'organe intermédiaire précontraint 30 est de forme annulaire centrée sur les axes 8a, 8b, de manière à former un bague comme cela est visible sur la figure 3. Cet organe 30 est par exemple logé dans évidements radiaux 40a, 40b, comme des gorges, pratiqués respectivement sur les deux pièces 4a, 4b au niveau de la jonction entre les corps de canalisation 12a, 12b et leurs brides respectives 6a, 6b. En d'autres termes, ces deux évidements annulaires 40a, 40b forment ensemble un espace défini intérieurement par les brides de fixation 6a, 6b. Le fait pour l'organe intermédiaire 30 d'être en retrait permet, par exemple, de constituer un passage de fluide 42 de section homogène et continue entre les deux pièces 4a, 4b, en passant par cet organe intermédiaire précontraint 30.

La première pièce 4a est réalisée dans un premier matériau présentant un premier coefficient de dilatation thermique C1, la seconde pièce 4b est réalisée dans un second matériau présentant un second coefficient de dilatation thermique C2, les organes de serrage 14 sont réalisés dans un troisième matériau présentant un troisième coefficient de dilatation thermique C3, et l'organe intermédiaire précontraint 30 est réalisé dans un quatrième matériau présentant un quatrième coefficient de dilatation thermique C4.

Dans tous les cas, les premier et troisième coefficients de dilatation thermique C1 et C3 satisfaisant la formule (a) suivante, pour toute température comprise dans un intervalle de températures allant de 0K à 120K :$C 3 < 0 , 7 . C 1 ,$ et plus préférentiellement C3 < 0,5.C1.

De même, les troisième et quatrième coefficients de dilatation thermique C3 et C4 satisfaisant la formule (b) suivante, pour toute température comprise dans un intervalle de températures allant de 0K à 120K :$0 , 8 < C 3 / C 4 < 1 , 2 ,$ et plus préférentiellement 0,9 < C3/C4 < 1,1.

En outre, dans le premier mode de réalisation préféré, les premier et second matériaux sont identiques ou ils présentent des caractéristiques proches en matière de dilatation thermique, de sorte que les premier et second coefficients de dilatation thermique C1 et C2 satisfont la formule (c) suivante, pour toute température comprise dans un intervalle de températures allant de 0K à 120K :$0 , 8 < C 1 / C 2 < 1 , 2 ,$ et plus préférentiellement 0,9 < C1/C2 < 1,1.

Pour les premier et second matériaux, il s'agit de préférence d'aluminium ou d'alliage d'aluminium, donc des matériaux identiques ou similaires, et de coefficients de dilatation thermique élevés.

Pour les troisième et quatrième matériaux, ils sont identiques ou de caractéristiques proches en matière de dilatation thermique, leurs coefficients de dilatation thermique demeurant relativement bas. A titre d'exemples indicatifs, il peut s'agir d'acier, ou d'un ou deux autres alliages à haute résistance mécanique, comme des alliages du type Nickel-Chrome, Nickel-Chrome-Fer, ou encore Nickel-Chrome-Cobalt.

Grâce à la conception proposée, la précontrainte n'est pas introduite dans les brides de fixation 6a, 6b, mais dans l'organe intermédiaire 30 prévu à cet effet. La précontrainte appliquée lors du montage à température ambiante peut ainsi rester sensiblement stable lorsque l'ensemble 2 est soumis à des température cryogéniques, garantissant l'absence de décollement et le maintien du double appui entre l'organe intermédiaire 30, et les deux pièces 4a, 4b situées de part et d'autre de cet organe 30.

Selon une alternative représentée sur la figure 4, l'organe vissé de serrage 14 est une simple vis 16, avec sa tête de vis 18 en appui sur la première partie de fixation 6a. Ici, cette partie 6a n'est plus une bride de fixation en saillie radialement, comme dans le mode de la figure précédente. En effet, la première pièce comporte une zone 3 de section en forme générale de U, dont une base du U correspond à la première partie de fixation 6a traversée par la vis 16. La seconde pièce 4b est par exemple un carter. Il peut néanmoins d'agir de toute pièce devant être assemblée avec la particularité de se trouver dans un environnement cryogénique. Il peut donc s'agir de carters, de supports d'équipements, de composants internes de vannes, de clapets, ou de tout autre équipement cryogénique ayant des composants qui doivent être assemblés entre eux par des liaisons vissées (clapets, tiges, pistons, poussoirs, etc.).

La seconde pièce 4b présente une zone pleine 5 intégrant la seconde partie de fixation 6b, en regard de la base du U 6a. Le jeu 32 selon la direction de serrage 10 reste ménagé entre les deux surfaces en regard de ces deux parties 6a, 6b traversées par une ou plusieurs vis 16. Concernant le serrage, il est noté que chaque vis 16 comporte une portion filetée 15 vissée dans un orifice fileté 19, réalisé dans la seconde partie de fixation 6b.

Dans cette alternative, l'organe intermédiaire précontraint 30 présente également de préférence une forme d'anneau d'axe parallèle à la direction de serrage 10. Pour son implantation au sein de l'ensemble 2, un évidement annulaire 44 est réalisé autour de la base du U 6a, et l'anneau est introduit dans cet évidement. Grâce à ce dernier, l'ensemble 2 peut présenter une surface extérieure de section sensiblement homogène et continue.

Dans cette configuration, comme cela est visible sur la figure 4, la vis 4 est préférentiellement entourée par l'organe intermédiaire précontraint 30. Néanmoins, il est noté que ce dernier pourrait adopter toute autre forme qu'une forme annulaire, sans sortir du cadre de l'invention.

L'alternative présentée présente de nombreux points communs et similitudes avec le mode décrit ci-dessus, notamment le fait que les première et seconde surfaces d'appui 24a, 24b de la première pièce 4a sont coplanaires, c'est-à-dire inscrites dans un même plan, orthogonal ou sensiblement orthogonal à la direction de serrage 10.

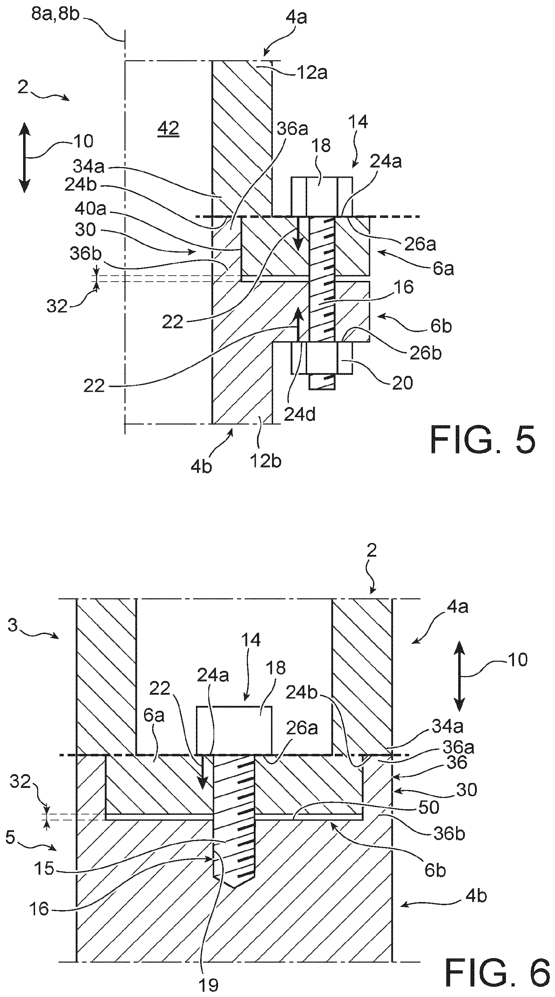

Dans le second mode de réalisation préféré de la figure 5, très similaire au premier mode de réalisation de la figure 2, la différence principale réside simplement dans le fait que l'organe intermédiaire précontraint 30 est réalisé d'un seul tenant avec la seconde pièce 4b. Les second et quatrième matériaux sont ainsi identiques, et dans ce second mode, il s'agit de préférence d'un matériau identique ou avec des caractéristiques de dilatation thermique proches de celle du troisième matériau formant les organes vissés de serrage 14. Ainsi, les premier et second coefficients de dilatation thermique C1 et C2 satisfont la formule (d) suivante, pour toute température comprise dans un intervalle de températures allant de 0K à 120K :$C 2 < 0 , 7 . C 1$et plus préférentiellement C2 < 0,5.C1.

Dans ce second mode de réalisation préféré, la position des boulons 14 est inversée, avec les têtes de vis 18 formant la première portion d'appui 26a, et coopérant avec la première surface d'appui 24a prévue sur la première bride 6a. Néanmoins, la même position que celle adoptée dans le premier mode de réalisation préféré pourrait être retenue pour les boulons 14 de ce seconde mode, sans sortir du cadre de l'invention.

Enfin, dans l'alternative montrée sur la figure 6, la conception est très proche de celle de l'alternative au premier mode représentée sur la figure 4, mais toujours avec la différence principale résidant dans le fait que l'organe intermédiaire précontraint 30 est réalisé d'un seul tenant avec la seconde pièce 4b.

Par conséquent, dans la zone pleine 5 de la seconde pièce 4b, l'intégration de l'organe intermédiaire précontraint 30 forme avec la seconde partie de fixation 6b un évidement 50 dans la direction de serrage 10. Cet évidement 50 loge la base du U 6a, formant la première partie de fixation de la première pièce 4a. En outre, le jeu 32 est ici défini entre le fond de cet évidement 50, et la surface extérieure de la base du U 6a.

Bien entendu, diverses modifications peuvent être apportées par l'homme du métier à l'invention qui vient d'être décrite, uniquement à titre d'exemples non limitatifs, et dont la portée est définie par les revendications annexées. En particulier, les éléments des différents modes de réalisation préférés et de leurs alternatives sont combinables et interchangeables, et à cet égard, il est noté que sur les figures, les éléments portant les mêmes références numériques correspondent à des éléments identiques ou similaires.

## Revendications

1. Ensemble vissé et précontraint (2) comprenant une première pièce (4a), une seconde pièce (4b), ainsi qu'au moins un organe vissé de serrage (14) coopérant avec chacune des première et seconde pièces de manière à appliquer un effort de serrage (22), selon une direction de serrage (10) forçant ces deux pièces l'une vers l'autre, la première pièce comportant une première partie de fixation (6a) traversée par l'organe de serrage (14) et présentant une première surface d'appui (24a) contre laquelle est agencée une première portion d'appui (26a) de l'organe de serrage (14),
la première pièce (4a) étant réalisée dans un premier matériau présentant un premier coefficient de dilatation thermique C1, la seconde pièce (4b) étant réalisée dans un second matériau présentant un second coefficient de dilatation thermique C2, et l'organe de serrage (14) étant réalisé dans un troisième matériau présentant un troisième coefficient de dilatation thermique C3, les premier et troisième coefficients de dilatation thermique C1 et C3 satisfaisant la formule (a) suivante, pour toute température comprise dans un intervalle de températures allant de 0K à 120K : $C 3 < 0 , 7 . C 1 ,$ et plus préférentiellement C3 < 0,5.C1,
**caractérisé en ce que** l'ensemble comporte en outre un organe intermédiaire (30) précontraint par l'effort de serrage, l'organe intermédiaire étant réalisé dans un quatrième matériau présentant un quatrième coefficient de dilatation thermique C4, les troisième et quatrième coefficients de dilatation thermique C3 et C4 satisfaisant la formule (b) suivante, pour toute température comprise dans un intervalle de températures allant de 0K à 120K : $0 , 8 < C 3 / C 4 < 1 , 2 ,$ et plus préférentiellement 0,9 < C3/C4 < 1,1
**en ce que** la première pièce (4a) comporte une première partie de transmission d'effort (34a) présentant une seconde surface d'appui (24b) contre laquelle est agencée une première portion d'extrémité (36a) de l'organe intermédiaire précontraint (30), les première et seconde surfaces d'appui (24a, 24b) de la première pièce étant coplanaires, et **en ce que** la seconde pièce (4b) comporte une seconde partie de fixation (6b) traversée par l'organe de serrage (14), un jeu (32) étant prévu entre les première et seconde parties de fixation (6a, 6b), selon la direction de serrage (10).

2. Ensemble selon la revendication 1, **caractérisé en ce que** la seconde pièce (4b) comporte une seconde partie de transmission d'effort (34b) présentant une troisième surface d'appui (24c) contre laquelle est agencée une seconde portion d'extrémité (36b) de l'organe intermédiaire précontraint (30), et **en ce que** les premier et second coefficients de dilatation thermique C1 et C2 satisfont la formule (c) suivante, pour toute température comprise dans un intervalle de températures allant de 0K à 120K : $0 , 8 < C 1 / C 2 < 1 , 2 ,$ et plus préférentiellement 0,9 < C1/C2 < 1,1.

3. Ensemble selon la revendication 2, **caractérisé en ce que** la seconde partie de fixation (6b) de la seconde pièce, traversée par l'organe de serrage (14), présente une quatrième surface d'appui (24d) contre laquelle est agencée une seconde portion d'appui (26b) de l'organe de serrage (14), les troisième et quatrième surfaces d'appui (24c, 24d) de la seconde pièce étant coplanaires.

4. Ensemble selon la revendication 2 ou 3, **caractérisé en ce que** l'organe vissé de serrage (14) est un boulon dont la tête de vis (18) et l'écrou (20) forment respectivement les première et seconde portions d'appui (26a, 26b), ou inversement, ou **en ce que** l'organe de serrage (14) est une vis (16) dont la portion filetée (15) est vissée dans un orifice fileté (19) réalisé dans l'une des première et seconde parties de fixation (6a, 6b).

5. Ensemble selon l'une quelconque des revendications 2 à 4, **caractérisé en ce que** les première et seconde parties de fixation (6a, 6b) sont des brides de fixation, préférentiellement annulaires, d'axes centraux (8a, 8b) parallèles à la direction de serrage (10), l'organe intermédiaire précontraint (30) étant de préférence agencé dans un espace (40a, 40b) défini intérieurement par les brides de fixation, et préférentiellement de forme annulaire.

6. Ensemble selon l'une quelconque des revendications 2 à 4, **caractérisé en ce que** la première pièce (4a) comporte une zone (3) de section en forme générale de U, dont une base du U correspond à la première partie de fixation (6a) traversée par l'organe de serrage (14), celui-ci étant préférentiellement entouré par l'organe intermédiaire précontraint (30), de préférence de forme annulaire.

7. Ensemble selon la revendication 1, **caractérisé en ce que** l'organe intermédiaire précontraint (30) est réalisé d'un seul tenant avec la seconde pièce (4b), les second et quatrième matériaux étant identiques, et **en ce que** les premier et second coefficients de dilatation thermique C1 et C2 satisfont la formule (d) suivante, pour toute température comprise dans un intervalle de températures allant de 0K à 120K : $C 2 < 0 , 7 . C 1 ,$ et plus préférentiellement C2 < 0,5.C1.

8. Ensemble selon l'une quelconque des revendications précédentes, **caractérisé en ce que** le jeu (32) prévu entre les première et seconde parties de fixation (6a, 6b), selon la direction de serrage (10), est compris entre 0,1 et 1 mm, dans des conditions normales de température et de pression.

9. Ensemble selon l'une quelconque des revendications précédentes, **caractérisé en ce que** les première et seconde pièces (4a, 4b) correspondent chacune à un élément parmi les éléments suivants : une vanne, un clapet, un boitier, une canalisation, ou tout autre composant de moteur pour véhicule spatial ou pour aéronef, de préférence à hydrogène, ou tout composant d'un système de gestion de fluides cryogéniques.

10. Moteur (1) d'aéronef ou de véhicule spatial, comprenant au moins un ensemble vissé et précontraint (2) selon l'une quelconque des revendications précédentes, le moteur étant préférentiellement un moteur à hydrogène.

## Patentansprüche

1. Vorgespannte Schraubanordnung (2), umfassend ein erstes Teil (4a), ein zweites Teil (4b) sowie mindestens ein geschraubtes Spannelement (14), das mit jedem von dem ersten und zweiten Teil zusammenwirkt, um eine Spannkraft (22) gemäß einer Spannrichtung (10) auszuüben, die diese beiden Teile zueinander zwingt, wobei das erste Teil einen ersten Befestigungsteil (6a) aufweist, der von dem Spannelement (14) durchquert wird, und eine erste Auflagefläche (24a) aufweist, gegen welche ein erster Auflageabschnitt (26a) des Spannelements (14) angeordnet ist,
wobei das erste Teil (4a) aus einem ersten Material hergestellt ist, das einen ersten Wärmeausdehnungskoeffizienten C1 aufweist, das zweite Teil (4b) aus einem zweiten Material hergestellt ist, das einen zweiten Wärmeausdehnungskoeffizienten C2 aufweist, und das Spannelement (14) aus einem dritten Material hergestellt ist, das einen dritten Wärmeausdehnungskoeffizienten C3 aufweist, wobei der erste und dritte Wärmeausdehnungskoeffizienten C1 und C3 für jede Temperatur in einem Temperaturbereich von 0 K bis 120 K die folgende Formel (a) erfüllt: $C 3 < 0 , 7 . C 1$ und bevorzugter C3 < 0,5.C1,
**dadurch gekennzeichnet, dass** die Anordnung ferner ein durch die Spannkraft vorgespanntes Zwischenelement (30) aufweist, wobei das Zwischenelement aus einem vierten Material hergestellt ist, das einen vierten Wärmeausdehnungskoeffizienten C4 aufweist, wobei der dritte und vierte Wärmeausdehnungskoeffizient C3 und C4 für jede Temperatur in einem Temperaturbereich von 0 K bis 120 K die folgende Formel (b) erfüllt: $0 , 8 < C 3 / C 4 < 1 , 2$ und bevorzugter 0,9 < C3/C4 < 1,1
dass das erste Teil (4a) einen ersten Kraftübertragungsteil (34a) aufweist, der eine zweite Auflagefläche (24b) aufweist, gegen die ein erster Endabschnitt (36a) des vorgespannten Zwischenelements (30) angeordnet ist, wobei die erste und zweite Auflagefläche (24a, 24b) des ersten Teils koplanar sind, und dass das zweite Teil (4b) einen zweiten Befestigungsteil (6b) aufweist, der von dem Spannelement (14) durchquert wird, wobei ein Spiel (32) zwischen dem ersten und zweiten Befestigungsteil (6a, 6b) gemäß der Spannrichtung (10) vorgesehen ist.

2. Anordnung nach Anspruch 1, **dadurch gekennzeichnet, dass** das zweite Teil (4b) einen zweiten Kraftübertragungsteil (34b) aufweist, der eine dritte Auflagefläche (24c) aufweist, gegen die ein zweiter Endabschnitt (36b) des vorgespannten Zwischenelements (30) angeordnet ist, und dass der erste und zweite Wärmeausdehnungskoeffizient C1 und C2 für jede Temperatur in einem Temperaturbereich von 0 K bis 120 K die folgende Formel (c) erfüllt: $0 , 8 < C 1 / C 2 < 1 , 2$ und bevorzugter 0,9 < C1/C2 < 1,1.

3. Anordnung nach Anspruch 2, **dadurch gekennzeichnet, dass** der zweite Befestigungsabschnitt (6b) des zweiten Teils, das von dem Spannelement (14) durchquert wird, eine vierte Auflagefläche (24d) aufweist, gegen die ein zweiter Auflageabschnitt (26b) des Spannelements (14) angeordnet ist, wobei die dritte und vierte Auflagefläche (24c, 24d) des zweiten Teils koplanar sind.

4. Anordnung nach Anspruch 2 oder 3, **dadurch gekennzeichnet, dass** das geschraubte Spannelement (14) eine Schraube ist, deren Schraubenkopf (18) und Mutter (20) jeweils den ersten und zweiten Auflageabschnitt (26a, 26b) bilden, oder umgekehrt, oder dass das Spannelement (14) eine Schraube (16) ist, deren Gewindeabschnitt (15) in eine Gewindebohrung (19) eingeschraubt ist, die in einem von dem ersten und zweiten Befestigungsabschnitt (6a, 6b) ausgeführt ist.

5. Anordnung nach einem der Ansprüche 2 bis 4, **dadurch gekennzeichnet, dass** das erste und zweite Befestigungsteil (6a, 6b) vorzugsweise ringförmige Befestigungsflansche mit Mittelachsen (8a, 8b) sind, die parallel zur Spannrichtung (10) sind, wobei das vorgespannte Zwischenelement (30) vorzugsweise in einem von den Befestigungsflanschen innen definierten Raum (40a, 40b) angeordnet und vorzugsweise ringförmig ist.

6. Anordnung nach einem der Ansprüche 2 bis 4, **dadurch gekennzeichnet, dass** das erste Teil (4a) einen Bereich (3) mit einem allgemein U-förmigen Querschnitt aufweist, von dem eine Basis des U dem ersten Befestigungsteil (6a) entspricht, der von dem Spannelement (14) durchquert wird, wobei dieses vorzugsweise von dem vorgespannten, vorzugsweise ringförmigen Zwischenelement (30) umgeben ist.

7. Anordnung nach Anspruch 1, **dadurch gekennzeichnet, dass** das vorgespannte Zwischenelement (30) einteilig mit dem zweiten Teil (4b) ausgeführt ist, wobei das zweite und vierte Material identisch sind, und dass der erste und zweite Wärmeausdehnungskoeffizient C1 und C2 für jede Temperatur in einem Temperaturbereich von 0 K bis 120 K die folgende Formel (d) erfüllen: $C 2 < 0 , 7 . C 1$ und bevorzugter C2 < 0,5.C1.

8. Anordnung nach einem der vorhergehenden Ansprüche, **dadurch gekennzeichnet, dass** das zwischen dem ersten und zweiten Befestigungsteil (6a, 6b) vorgesehene Spiel (32) gemäß der Spannrichtung (10) unter normalen Temperatur- und Druckbedingungen zwischen 0,1 und 1 mm liegt.

9. Anordnung nach einem der vorhergehenden Ansprüche, **dadurch gekennzeichnet, dass** das erste und das zweite Teil (4a, 4b) jeweils einem der folgenden Elemente entsprechen: einem Ventil, einer Klappe, einem Gehäuse, einer Rohrleitung oder jeder anderen Motorkomponente für ein Raum- oder Luftfahrzeug, vorzugsweise mit Wasserstoff, oder einer beliebigen Komponente eines Managementsystems für kryogene Fluide.

10. Luft- oder Raumfahrzeugtriebwerk (1), umfassend mindestens eine vorgespannte Schraubanordnung (2) nach einem der vorhergehenden Ansprüche, wobei das Triebwerk vorzugsweise ein Wasserstofftriebwerk ist.

## Claims

1. A screw and preloaded assembly (2) comprising a first part (4a), a second part (4b), as well as at least one screw tightening member (14) cooperating with each of the first and second parts so as to apply a tightening force (22), in a tightening direction (10) forcing these two parts towards each other, the first part comprising a first fastening portion (6a) traversed by the tightening member (14) and having a first bearing surface (24a) against which a first bearing portion (26a) of the tightening member (14) is arranged,
the first part (4a) being made of a first material with a first coefficient of thermal expansion C1, the second part (4b) being made of a second material with a second coefficient of thermal expansion C2, and the tightening member (14) being made of a third material with a third coefficient of thermal expansion C3, the first and third coefficients of thermal expansion C1 and C3 satisfying the following formula (a), for any temperature within a temperature interval ranging from 0K to 120K: $C 3 < 0.7 xC 1 ,$ and more preferably C3 < 0.5xC1,
**characterized in that** the assembly further comprises an intermediate member (30) preloaded by the tightening force, the intermediate member being made of a fourth material having a fourth coefficient of thermal expansion C4, the third and fourth coefficients of thermal expansion C3 and C4 satisfying the following formula (b), for any temperature within a temperature interval ranging from 0K to 120K: $0.8 < C 3 / C 4 < 1.2 ,$ and more preferably 0.9 < C3/C4 < 1.1
**in that** the first part (4a) comprises a first force transmission portion (34a) having a second bearing surface (24b) against which a first end portion (36a) of the preloaded intermediate member (30) is arranged, the first and second bearing surfaces (24a, 24b) of the first part being coplanar, and **in that** the second part (4b) comprises a second fastening portion (6b) traversed by the tightening member (14), a clearance (32) being provided between the first and second fastening portions (6a, 6b), in the tightening direction (10).

2. The assembly as claimed in claim 1, **characterized in that** the second part (4b) comprises a second force transmission portion (34b) having a third bearing surface (24c) against which a second end portion (36b) of the preloaded intermediate member (30) is arranged, and **in that** the first and second coefficients of thermal expansion C1 and C2 satisfy the following formula (c), for any temperature within a temperature interval ranging from 0K to 120K: $0.8 < C 1 / C 2 < 1.2 ,$ and more preferably 0.9 < C1/C2 < 1.1.

3. The assembly as claimed in claim 2, **characterized in that** the second fastening portion (6b) of the second part, traversed by the tightening member (14), has a fourth bearing surface (24d) against which a second bearing portion (26b) of the tightening member (14) is arranged, the third and fourth bearing surfaces (24c, 24d) of the second part being coplanar.

4. The assembly as claimed in claim 2 or 3, **characterized in that** the screw tightening member (14) is a bolt, whose screw head (18) and nut (20) form respectively the first and second bearing portions (26a, 26b), or vice versa, or **in that** the tightening member (14) is a screw (16), whose threaded portion (15) is screwed into a threaded hole (19) made in one of the first and second fastening portions (6a, 6b).

5. The assembly as claimed in any one of claims 2 to 4, **characterized in that** the first and second fastening portions (6a, 6b) are fastening flanges, preferably annular, with central axes (8a, 8b) that are parallel to the tightening direction (10), the preloaded intermediate member (30) being preferably arranged in a space (40a, 40b) defined internally by the fastening flanges, and preferably annular shaped.

6. The assembly as claimed in any one of claims 2 to 4, **characterized in that** the first part (4a) comprises an area (3) with a generally U-shaped cross-section, where the base of the U corresponds to the first fastening portion (6a) traversed by the tightening member (14), the latter being preferably surrounded by the preloaded intermediate member (30), preferably annular shaped.

7. The assembly as claimed in claim 1, **characterized in that** the preloaded intermediate member (30) is made in one piece with the second part (4b), the second and fourth materials being identical, and **in that** the first and second coefficients of thermal expansion C1 and C2 satisfy the following formula (d), for any temperature within a temperature interval ranging from 0K to 120K: $C 2 < 0.7 \times C 1 ,$ and more preferably C2 < 0.5xC1.

8. The assembly as claimed in any one of the preceding claims, **characterized in that** the clearance (32) provided between the first and second fastening portions (6a, 6b), in the tightening direction (10), is between 0.1 and 1 mm, under normal temperature and pressure conditions.

9. The assembly as claimed in any one of the preceding claims, **characterized in that** the first part and second part (4a, 4b) each correspond to one of the following elements: a valve, a flap, a housing, a pipe, or any other component of an engine for a spacecraft or aircraft, preferably a hydrogen-powered engine, or any component of a cryogenic fluid management system.

10. An aircraft or spacecraft engine (1), comprising at least one screw and preloaded assembly (2) as claimed in any one of the preceding claims, the engine preferably being a hydrogen engine.
